# EUROPÄISCHE PATENTSCHRIFT

(11) **EP 3 847 348 B1**
(45) Veröffentlichungstag und Bekanntmachung des Hinweises auf die Patenterteilung: **17.08.2022**
(21) Anmeldenummer: 19759360.1
(22) Anmeldetag: 27.08.2019
(51) Int. Cl.: F01N 3/021, F01N 3/28, F01N 13/14, F01N 3/035

(54) **KATALYSATOR MIT METALLISCHEM WABENKÖRPER**
CATALYST HAVING A METAL HONEYCOMB BODY
CATALYSEUR À CORPS MÉTALIQUE EN NID D'ABEILLES

(30) Priorität: 03.09.2018 DE 102018214929
(43) Veröffentlichungstag der Anmeldung: 14.07.2021
(73) Patentinhaber: Vitesco Technologies GmbH, 93055 Regensburg (DE)
(72) Erfinder: HIRTH, Peter, 81737 München (DE); RINGS, Florian, 81737 München (DE)
(74) Vertreter: Vitesco Technologies
(86) Internationale Anmeldenummer: PCT/EP2019/072740
(87) Internationale Veröffentlichungsnummer: WO 2020/048813

(56) Entgegenhaltungen:
- DE-A1-102017 002 266
- US-A- 5 232 671
- US-A1- 2002 174 770
- US-B2- 9 260 999

## Beschreibung

### Technisches Gebiet

Die Erfindung betrifft einen Katalysator zur Reinigung von Abgasen, mit einem Wabenkörper, der eine Mehrzahl von Strömungskanälen ausbildet, welche von einer Gaseintrittsseite in axialer Richtung hin zu einer Gasaustrittsseite durchströmbar sind, mit einem Innenmantel, der den Wabenkörper umschließt, mit einem Außenmantel, der den Innenmantel umschließt, und mit einem Isolationsbereich, welcher zwischen dem Innenmantel und dem Außenmantel angeordnet ist.

### Stand der Technik

Katalysatoren aus metallischen Wabenkörpern sind in vielfältiger Weise im Stand der Technik bekannt. Gewöhnlich werden die Wabenkörper durch das Aufeinanderstapeln mehrere Metallfolien und das anschließende Aufwickeln erzeugt. Die Wabenkörper werden anschließend in einen rohrartigen Mantel eingesetzt und mit diesem stoffschlüssig verbunden. Um eine thermische Isolation gegenüber der Umgebung des Katalysators zu schaffen ist der Mantel mehrteilig ausgeführt. Speziell ist der Mantel in einen Außenmantel und einen Innenmantel aufgeteilt, wobei zwischen einem Außenmantel und einem Innenmantel ein Luftspalt erzeugt wird, der der thermischen Isolation dient.

Die Druckschrift US 9 260 999 B2 offenbart ein katalytisches Substrat zur Verwendung mit einer Dose in einem Kraftfahrzeugauspuffsystem. Das katalytische Substrat umfasst ein Isoliermaterial, das das Substrat thermisch in eine zentrale Zone und eine röhrenförmige äußere Zone, die die zentrale Zone umgibt, trennt, wobei das Isoliermaterial, die zentrale Zone und die äußere Zone gemeinsam ein modifiziertes Substrat definieren, wobei das Isoliermaterial so angepasst ist, dass in einem Betriebszustand die Temperaturdifferenz über das Isoliermaterial mindestens 25° C beträgt.

Die Druckschrift US 5 232 671 A offenbart einen verbesserten elektrisch leitenden Metallwabenkörper, der eine Vielzahl von gewellten dünnen Metallstreifen aufweist, die Heizstreifen sein können und sich elektrisch parallel zwischen ansonsten elektrisch isolierten Verbindungsplatten erstrecken. Die gewellten dünnen Metallstreifen haben jeweils einen flachen Mittelabschnitt. Eine erste Gruppe der Streifen ist an ihren flachen Mittelteilen zusammengefasst und um einen von zwei starren Mittelpfosten gebogen, und eine zweite Gruppe der Streifen ist zusammengefasst und in der entgegengesetzten Richtung um den anderen der Pfosten gebogen. Isoliermittel in Form eines flexiblen gewebten Keramikfaserstreifens isolieren die erste Gruppe und die zweite Gruppe voneinander und von den zentralen Pfosten. Die Verbindungsplatten definieren eine segmentierte Halteschale um den Wabenkörper. Eine Batterie ist mit den Anschlussplatten verbunden, wobei Strom von einer Anschlussplatte durch gewellte dünne Metallstreifen zur anderen Anschlussplatte und zurück zur Batterie fließt.

Nachteilig an den Vorrichtungen im Stand der Technik ist insbesondere, dass die Katalysatoren einerseits mehrteilig aufgebaut sind, was die Komplexität des Bauteils und insbesondere dessen Fertigung erhöht, und andererseits die mangelnde thermische Isolationswirkung, die zum Beispiel durch einen einzigen umlaufenden Luftspalt erzeugt werden kann. Insbesondere bei hohen Temperaturen reicht diese Isolationswirkung nicht mehr aus und es kommt zu einem erhöhten ungewollten Wärmeverlust.

### Darstellung der Erfindung, Aufgabe, Lösung, Vorteile

Daher ist es die Aufgabe der vorliegenden Erfindung ein einen Katalysator mit einem metallischen Wabenkörper zu schaffen, welcher einen besonders einfachen Aufbau aufweist und besonders flexibel an seinen jeweiligen Einsatzweck angepasst werden kann. Die Aufgabe hinsichtlich des Katalysators wird durch einen Katalysator mit den Merkmalen von Anspruch 1 gelöst.

Ein Ausführungsbeispiel der Erfindung betrifft einen Katalysator zur Reinigung von Abgasen, mit einem Wabenkörper, der eine Mehrzahl von Strömungskanälen ausbildet, welche von einer Gaseintrittsseite in axialer Richtung hin zu einer Gasaustrittsseite durchströmbar sind, mit einem Innenmantel, der den Wabenkörper umschließt, mit einem Außenmantel, der den Innenmantel umschließt, und mit einem Isolationsbereich, welcher zwischen dem Innenmantel und dem Außenmantel angeordnet ist, wobei der Wabenkörper, der Innenmantel, der Außenmantel und der Isolationsbereich aus genau zwei aus Metallfolien gebildeten Lagen gebildet sind, die aufeinander gestapelt und entlang einer Wickelrichtung quer zur axialen Richtung aufgewickelt sind.

Der erfindungsgemäße Katalysator zeichnet sich insbesondere dadurch aus, dass er vollständig aus den beiden Metallfolien beziehungsweise aus den aus den Metallfolien gebildeten Lagen erzeugt ist. Der Wabenkörper, der Innenmantel, der Außenmantel und der Isolationsbereich sind aus den beiden Lagen einteilig erzeugt. Es entfallen somit die Montageprozesse und die Verbindungsprozesse zwischen dem Wabenkörper, den Mänteln und dem Isolationsbereich.

Mit der axialen Richtung ist die Richtung gemeint, entlang welcher sich die von dem Wabenkörper ausgebildeten Strömungskanäle im Wesentlichen erstrecken.

Die Wickelrichtung liegt quer zur axialen Richtung und erstreckt sich entlang der längeren Ausdehnung der Lagen. Entlang der Wickelrichtung reihen sich auch die einzelnen Abschnitte der ersten Lage aneinander.

Die einzelnen Elemente des Katalysators werden vollständig durch das Aufwickeln der Lagen ausgebildet, durch die unterschiedliche Beschaffenheit der einzelnen Abschnitte der ersten Lage werden die Elemente des Katalysators erzeugt. Dies bietet den Vorteil, dass die Elemente aufgrund der gemeinsamen ersten und zweiten Lage bereits einteilig miteinander verbunden sind und nicht nachträglich montiert und verbunden werden müssen.

Besonders vorteilhaft ist es, wenn die erste Lage zumindest teilweise strukturiert ist und die zweite Lage glatt ist.

Durch eine zumindest teilweise strukturierte erste Lage, die beispielsweise Wellungen oder ähnliches aufweist, und eine zweite glatte Lage, die aufeinandergestapelt und zusammen aufgewickelt sind, können die unterschiedlichen Strukturen eines Katalysators auf einfache Weise erzeugt werden. Durch einen gewellten Abschnitt der ersten Lage können infolge des Aufwickelns Strömungskanäle erzeugt werden, die sich letztlich in axialer Richtung durch den Wabenkörper erstrecken.

Durch einen nicht strukturierten Bereich der ersten Lage in Verbindung mit der zweiten Lage kann beispielsweise ein Mantel erzeugt werden, der den Wabenkörper in radialer Richtung begrenzt.

Durch das Vorsehen einer zweiten glatten Lage kann verhindert werden, dass die erste Lage beim Aufwickeln mit radial innen oder außen liegenden Bereichen verhakt, indem beispielsweise die eingeformten Strukturen ineinander eingreifen. Durch das Vorsehen der glatten zweiten Lage wird eine physische Trennung der durch die erste Lage erzeugten Schichten erreicht.

Die glatte Lage muss nicht zwangsweise vollständig glatt sein, sondern kann auch eine deutlich schwächere Wellung aufweisen als die teilweise strukturierte Lage. Insbesondere kann die glatte Lage sogenannte Mikrowellungen aufweisen, die sich durch besonders geringe Wellhöhen auszeichnet.

Auch ist es vorteilhaft, wenn die erste Lage in mehrere Abschnitte unterteilt ist, die benachbart zueinander entlang der Wickelrichtung angeordnet sind. Durch diese Abschnitte, die jeweils unterschiedlich ausgebildet sein können hinsichtlich ihrer Struktur, können vorteilhaft mit einer gemeinsamen Lage die unterschiedlichen Elemente eines Katalysators erzeugt werden.

Ein bevorzugtes Ausführungsbeispiel ist dadurch gekennzeichnet, dass die erste Lage abwechselnd strukturierte und glatte Abschnitte aufweist.

Auch ist es zu bevorzugen, wenn der erste Abschnitt der ersten Lage zusammen mit der zweiten Lage den die Strömungskanäle aufweisenden Wabenkörper ausbildet. Hierzu weist der erste Abschnitt beispielsweise eine Wellung auf, die beim Aufwickeln in Verbindung mit der aufgelegten zweiten Lage die einzelnen Strömungskanäle ausbildet. Über die Gestaltung der Wellung des ersten Abschnitts kann der Querschnitt und die Zelldichte der Strömungskanäle beeinflusst werden. Über die Länge des ersten Abschnitts kann die Anzahl der erzeugten Strömungskanäle und die Größe des durch das Aufwickeln erzeugten Wabenkörpers beeinflusst werden.

Darüber hinaus ist es vorteilhaft, wenn der zweite Abschnitt der ersten Lage zusammen mit der zweiten Lage den den durchströmbaren Bereich in radialer Richtung begrenzenden Innenmantel ausbildet.

Durch einen glatten zweiten Abschnitt kann in Verbindung mit der glatten zweiten Lage und dem Aufwickeln ein kompakter Innenmantel gebildet werden. Je nach der Länge des zweiten Abschnitts kann die radiale Dicke des Innenmantels beeinflusst werden. Wenn der zweite Abschnitt länger ist, kann eine mehrfache Umschlingung des durch den ersten Abschnitt erzeugten Wabenkörper erfolgen, wodurch der Innenmantel dicker und stabiler wird.

Weiterhin ist es vorteilhaft, wenn der dritte Abschnitt der ersten Lage zusammen mit der zweiten Lage den Isolationsbereich bildet, welcher den Innenmantel vom Außenmantel beabstandet.

Der Isolationsbereich dient insbesondere der thermischen Isolierung des Wabenkörpers von der Umgebung des Katalysators. Konkret soll die Wärmeabgabe weg vom Katalysator verringert werden, so dass eine möglichst hohe Effizienz des Katalysators erreicht werden kann.

Durch einen möglichst dicken Isolationsbereich kann die Wärmeabgabe in radialer Richtung eingeschränkt werden. Der dritte Abschnitt kann beispielsweise ebenfalls Sicken oder Wellungen aufweisen, die beim Aufwickeln der beiden Lagen eine Beabstandung zu den jeweils durch das weitere Aufwickeln nachfolgenden Lagen erzeugt. So kann ein möglichst großes von den einzelnen Lagen des Isolationsbereichs eingeschlossenes Luftvolumen erzeugt werden.

Zusätzlich kann der dritte Abschnitt Beschichtungen aufweisen, die die Wärmeabgabe reduzieren oder den Reflexionsgrad erhöhen, so dass die Wärmestrahlung radial zurück in Richtung des Wabenkörpers reflektiert wird.

Auch ist es zweckmäßig, wenn der vierte Abschnitt der ersten Lage zusammen mit der zweiten Lage den den Katalysator in radiale Richtung nach außen begrenzenden Außenmantel ausbildet.

Der vierte Abschnitt ist vorzugsweise nicht strukturiert und dient zur Ausbildung des äußeren Mantels, der den Wabenkörper, den Innenmantel und den Isolationsbereich nach außen hin abschließt. Der äußere Mantel dient darüber hinaus auch zur Verbindung des Katalysators mit anderen Rohrleitungen beziehungsweise Gehäusen einer Vorrichtung zur Abgasnachbehandlung. Der vierte Abschnitt kann daher auch eine in axialer Richtung größere Erstreckung aufweisen als die erste Lage in den restlichen Abschnitten aufweist. Dadurch wird ein Außenmantel erzeugt, der in axialer Richtung übersteht und somit Anbindungspunkte für Gehäuse und Rohrleitungen bildet.

Ähnlich wie bei dem zweiten Abschnitt, der den Innenmantel ausbildet, kann auch der vierte Abschnitt derart verändert werden, dass der Außenmantel eine größere Dicke aufweist. Auch kann der Außenmantel thermisch isolierende Beschichtungen aufweisen, um eine radiale Wärmeabgabe zu vermindern.

Darüber hinaus ist es vorteilhaft, wenn der dritte Abschnitt und/oder der vierte Abschnitt der ersten Lage mit einer den Emissionsgrad verringernden Beschichtung und/oder mit einer eine niedrigere Wärmeleitfähigkeit als das Grundmaterial der Lage aufweisenden Beschichtung beschichtet ist. Durch Beschichtungen dieser Art kann die Wärmeleitung und die Wärmestrahlung in radialer Richtung nach außen hin verringert werden. Dies führt zu einer höheren Temperatur im Bereich des Wabenkörpers und somit zu einer besseren Effizienz des Katalysators.

Da der Emissionsgrad sehr gering, beziehungsweise annähernd Null sein soll, sollen die Metallfolien, welche die Lagen ausbilden, auf dem Großteil ihrer Erstreckung rein metallische Oberflächen haben oder solche mit geringen Emissionsgraden. Geeignet sind zum Beispiel metallische Beschichtungen die noch höhere Reflexionsgrade aufweisen als die Metalle der Metallfolien selbst.

Keramische Beschichtungen wie Oxide von Aluminium (A1), Silizium (Si), Cer (Ce), Zirconium (Zr) oder ähnlichem sowie PVD-Beschichtungen(Physical Vapour Deposition) oder CVD-Beschichtungen (Chemical Vapour Deposition) haben tendenziell höhere Emissionsgrade und sind daher für die erfindungsgemäße Anwendung ungeeignet. Da diese Beschichtungen jedoch sehr geringe Wärmeleitfähigkeiten aufweisen, ist der Einsatz an begrenzten Bereichen der Metallfolien, insbesondere an Bereichen an denen die Lagen sich berühren, sinnvoll.

Es kann daher besonders vorteilhaft sein, wenn die Metallfolien unterschiedliche Beschichtungen entlang ihrer Erstreckung aufweisen, wobei insbesondere an den Kontaktpunkten zwischen den Lagen andere Beschichtungen verwendet werden können, als entlang der restlichen Erstreckung.

Weiterhin ist es zweckmäßig, wenn der zweite Abschnitt der ersten Lage und/oder der zweiten Lage an dem der Gaseintrittsseite zugewandten und/oder dem der Gasaustrittsseite zugewandten Endbereich die Lage durchdringende Löcher aufweist. Durch Löcher oder Öffnungen anderer Art kann die jeweilige Oberfläche beziehungsweise der ausgebildete wärmeleitende Querschnitt der einzelnen Abschnitte gezielt reduziert werden. Insbesondere die Wärmeleitung in axialer Richtung des Wabenkörpers oder quer zu dieser Richtung kann durch eine gezielte Reduzierung der Oberfläche reduziert werden. Löcher und Öffnungen können dabei bevorzugt auf den Anwendungsfall bezogene Formen aufweisen und auch in ihrer Dimensionierung und der Anordnung auf den jeweiligen Anwendungsfall zugeschnitten sein.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine perspektivische Ansicht der beiden übereinandergestapelten Lagen, welche den Katalysator ausbilden,
- Fig. 2: eine Schnittansicht durch den aufgewickelten Katalysator,
- Fig. 3: eine schematische Ansicht der Wellung, wie einzelne Abschnitte der Lagen diese aufweisen können,
- Fig. 4: eine schematische Ansicht einer Noppenstruktur, wie einzelne Abschnitte der Lagen diese aufweisen können, und
- Fig. 5 bis 8: jeweils eine perspektivische Ansicht einzelner Abschnitte der Lagen mit unterschiedlichen Anordnungen von die Lagen durchdringenden Lochungen.

### Bevorzugte Ausführung der Erfindung

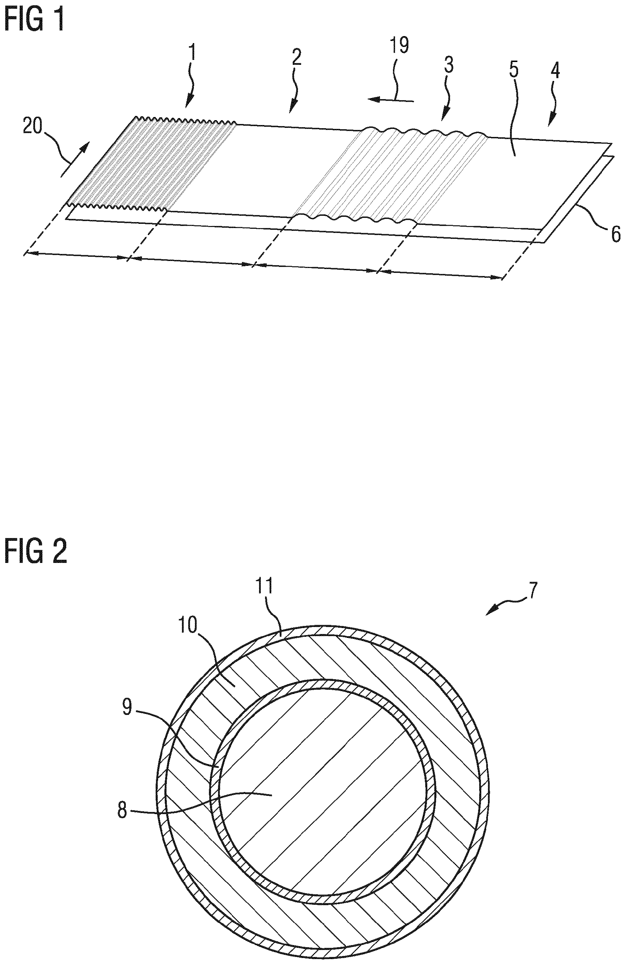

Die Figur 1 zeigt eine perspektivische Ansicht der zwei Metallfolien, welche die erste Lage 5 und die zweite Lage 6 bilden. Die beiden Lagen 5, 6 sind rechteckig und weisen eine kürzere Erstreckung in eine Richtung 20 auf, welche der axiale Richtung des fertig aufgewickelten Wabenkörpers entspricht, und eine längere Erstreckung entlang der Richtung 19, welche der Wickelrichtung entspricht, entlang welcher die Lagen 5, 6 zum Wabenkörper beziehungsweise zum vollständigen Katalysator aufgewickelt werden.

Die erste Lage 5 weist in Richtung 19 vier nebeneinander angeordnete Abschnitte auf, die unterschiedliche Bereiche des fertigen Katalysators ausbilden. Die zweite Lage 6 ist vollständig glatt ausgeführt.

Von links nach rechts weist die erste Lage 5 die Abschnitte 1 bis 4 auf. Abschnitt 1 weist eine Wellung auf, wobei die Wellenberge und Wellentäler parallel zu Richtung 20 verlaufen. Der Abschnitt 1 bildet im aufgewickelten Zustand den eigentlichen Wabenkörper aus, wobei die Wellung in Verbindung mit der glatten Lage 2 die einzelnen Strömungskanäle ausbildet, die in axialer Richtung 20 durchströmbar sind.

Abschnitt 2 ist glatt ausgeführt und bildet zusammen mit der zweiten Lage 6 den Innenmantel aus, welcher den Wabenkörper in radialer Richtung begrenzt und somit die vom Abgas durchströmbare Fläche begrenzt. Durch die glatte Ausgestaltung der beiden Lagen 5, 6 im Abschnitt 2 wird erreicht, dass der Innenmantel ebenfalls glatt ist und beiden Lagen 5, 6 in diesem Bereich nach dem Aufwickeln eng aneinander anliegen. Dies erhöht einerseits die Stabilität und ermöglicht andererseits auch die Erzeugung einer hohen Temperaturstabilität. Je nach Länge des zweiten Abschnitts, kann der Innenmantel mehr oder weniger dick und damit stabil ausgelegt werden.

Der dritte Abschnitt der ersten Lage 5 weist ebenfalls eine Wellung auf, wobei die Welldichte im gezeigten Beispiel geringer ist. Zusammen mit dem glatten Abschnitt der zweiten Lage 6 wird beim Aufwickeln der Isolationsbereich erzeugt, der zwischen dem durch Abschnitt 2 gebildeten Innenmantel und dem durch Abschnitt 4 gebildeten Außenmantel angeordnet ist.

Der Isolationsbereich kann durch die beispielhaft gezeigt Wellung geringer Welldichte gebildet werden, alternativ können auch andere Formen des Abschnitts 3 der ersten Lage 5 gewählt werden.

Abschnitt 4 der ersten Lage 5 und die zweite Lage 6 sind beide glatt ausgeführt und bilden im aufgewickelten Zustand den Außenmantel aus, der gleichzeitig den Katalysator in radialer Richtung abschließt.

Figur 2 zeigt eine Querschnitt durch einen erfindungsgemäßen Katalysator 7, wobei die einzelnen Elemente Wabenkörper 8, Innenmantel 9, Isolationsbereich 10 und Außenmantel 11 gezeigt sind, die durch das Aufwickeln der beiden aufeinandergestapelten Lagen 5, 6 erzeugt worden sind.

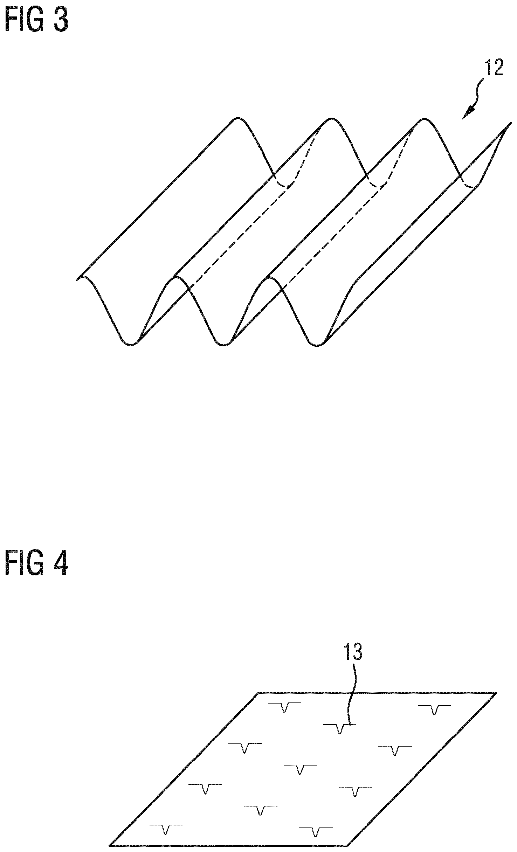

Die Figur 3 zeigt eine Wellung 12, wie sie in die unterschiedlichen Abschnitte 1 bis 4 der ersten Lage 5 eingeformt sein kann. Durch die Variation der Wellhöhe und der Welldichte kann die Anzahl der Kontaktpunkte zwischen dem Außenmantel und dem Innenmantel beeinflusst werden. Da es das Ziel ist einen möglichst geringen Wärmeübergang vom Innenmantel zum Außenmantel zuzulassen, ist es vorteilhaft, wenn die Anzahl der direkten Kontaktpunkte zwischen Innenmantel und Außenmantel möglichst gering sind.

Figur 4 zeigt eine alternative Formgebung für die Abschnitte 1 bis 4 der ersten Lage 5. Durch eingeprägte Noppen 13 kann die Kontaktfläche zwischen dem Innenmantel und dem Außenmantel weiter reduziert werden, wobei gleichzeitig die notwendige Beabstandung für die Ausbildung des Isolationsbereichs weiter sichergestellt wird. Durch eine Noppenstruktur 13 wird insbesondere die Wärmeleitung in axialer Richtung aber auch in radialer Richtung minimiert.

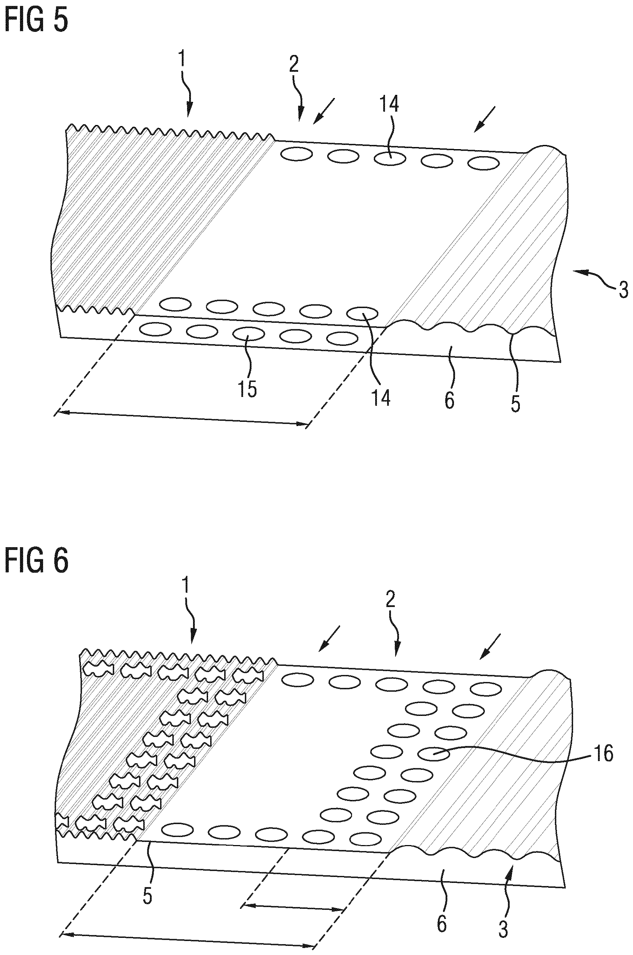

Figur 5 zeigt eine Ansicht der ersten Lage 5 und insbesondere des Abschnitts 2. Zur Reduzierung der Wärmeleitung in axialer Richtung weist der Abschnitt 2 Lochungen 14 an seinen axialen Endbereichen auf. Die Lochungen 14 sind einseitig oder beidseitig ausgeführt. Auch die darunter angedeutete zweite Lage 6 kann Lochungen 15 in dem an dem Abschnitt 2 anliegenden Bereich aufweisen. Durch die Verringerung des Materials an den axialen Endbereichen, welche im aufgewickelten Zustand die Gaseintrittsseite beziehungsweise die Gasaustrittsseite bilden, wird die Wärmeübertragung in axialer Richtung hin zum Gaseintritt oder zum Gasaustritt reduziert. Dadurch kann die Abkühlung des Katalysators und insbesondere die Abkühlung des Wabenkörpers reduziert werden.

Die Figur 6 zeigt eine Ausgestaltung der ersten Lage 5, wobei Lochungen 16 sowohl an den axialen Endbereiche angeordnet sind als auch innerhalb eines definierten Bereichs in axialer Richtung zwischen den Endbereichen. Im Beispiel der Figur 6 sind diese Lochungen 16 insbesondere an den Abschnitte 1 und 2 jeweils an dem Übergangsbereich zu den Abschnitten 2 und 3 angeordnet.

Dadurch soll zusätzlich zur Reduzierung der Wärmeleitung in axialer Richtung durch die Maßnahmen, die in Figur 5 gezeigt wurden, auch die unerwünschte Wärmeleitung in radialer Richtung reduziert werden.

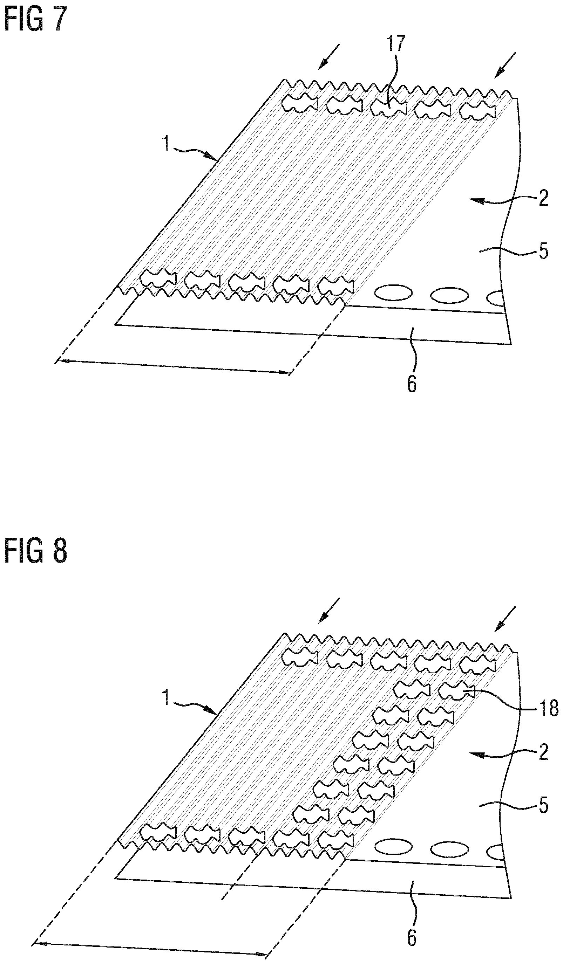

Figur 7 zeigt die mögliche Anordnung von Lochungen 17 im Bereich der axialen Endbereiche des Abschnitts 1, hierdurch soll ebenfalls die unerwünschte Wärmeleitung zu den späteren Stirnflächen an der Gaseintrittsseite und der Gasaustrittsseite reduziert werden.

Figur 8 zeigt eine Anordnung der Lochungen 18 an den axialen Endbereichen des Abschnitts 1 der ersten Lage 5 und an dem dem Abschnitt 2 zugewandten Randbereich des Abschnitts 1. Hierdurch soll die Wärmeleitung in axialer Richtung und auch insbesondere in radialer Richtung reduziert werden.

Die Lagen 5, 6 können zusätzlich zu den verschiedenen Lochungen auch Beschichtungen aufweisen, die die Wärmestrahlung reduzieren.

Die Ausführungsbeispiele der Figuren 1 bis 8 weisen insbesondere keinen beschränkenden Charakter auf und dienen der Verdeutlichung des Erfindungsgedankens.

## Patentansprüche

1. Katalysator (7) zur Reinigung von Abgasen, mit einem Wabenkörper (8), der eine Mehrzahl von Strömungskanälen ausbildet, welche von einer Gaseintrittsseite in axialer Richtung hin zu einer Gasaustrittsseite durchströmbar sind, mit einem Innenmantel (9), der den Wabenkörper (8) umschließt, mit einem Außenmantel (11), der den Innenmantel (9) umschließt, und mit einem Isolationsbereich (10), welcher zwischen dem Innenmantel (9) und dem Außenmantel (11) angeordnet ist, **dadurch gekennzeichnet, dass** der Wabenkörper (8), der Innenmantel (9), der Außenmantel (11) und der Isolationsbereich (10) aus genau zwei aus Metallfolien gebildeten Lagen (5, 6) gebildet sind, die aufeinander gestapelt und entlang einer Wickelrichtung (19) quer zur axialen Richtung (20) aufgewickelt sind.

2. Katalysator (7) nach Anspruch 1, **dadurch gekennzeichnet, dass** die erste Lage (5) zumindest teilweise strukturiert ist und die zweite Lage (6) glatt ist.

3. Katalysator (7) nach einem der vorhergehenden Ansprüche, **dadurch gekennzeichnet, dass** die erste Lage (5) in mehrere Abschnitte (1, 2, 3, 4) unterteilt ist, die benachbart zueinander entlang der Wickelrichtung (19) angeordnet sind.

4. Katalysator (7) nach einem der vorhergehenden Ansprüche, **dadurch gekennzeichnet, dass** die erste Lage (5) abwechselnd strukturierte und glatte Abschnitte (1, 2, 3, 4) aufweist.

5. Katalysator (7) nach einem der vorhergehenden Ansprüche 3 oder 4,
**dadurch gekennzeichnet, dass** der erste Abschnitt (1) der ersten Lage (5) zusammen mit der zweiten Lage (6) den die Strömungskanäle aufweisenden Wabenkörper (8) ausbildet.

6. Katalysator (7) nach einem der vorhergehenden Ansprüche 3 bis 5,
**dadurch gekennzeichnet, dass** der zweite Abschnitt (2) der ersten Lage (5) zusammen mit der zweiten Lage (6) den durchströmbaren Bereich in radialer Richtung begrenzenden Innenmantel (9) ausbildet.

7. Katalysator (7) nach einem der vorhergehenden Ansprüche 3 bis 6,
**dadurch gekennzeichnet, dass** der dritte Abschnitt (3) der ersten Lage (5) zusammen mit der zweiten Lage (6) den Isolationsbereich (10) bildet, welcher den Innenmantel (9) vom Außenmantel (11) beabstandet.

8. Katalysator (7) nach einem der vorhergehenden Ansprüche 3 bis 7
**dadurch gekennzeichnet, dass** der vierte Abschnitt (4) der ersten Lage (5) zusammen mit der zweiten Lage (6) den den Katalysator (7) in radiale Richtung nach außen begrenzenden Außenmantel (11) ausbildet.

9. Katalysator (7) nach einem der vorhergehenden Ansprüche 3 bis 8,
**dadurch gekennzeichnet, dass** der dritte Abschnitt (3) und/oder der vierte Abschnitt (4) der ersten Lage (5) mit einer den Emissionsgrad verringernden Beschichtung und/oder mit einer eine niedrigere Wärmeleitfähigkeit als das Grundmaterial der Lage (5) aufweisenden Beschichtung beschichtet ist.

10. Katalysator (7) nach einem der vorhergehenden Ansprüche 3 bis 9,
**dadurch gekennzeichnet, dass** der zweite Abschnitt (2) der ersten Lage (5) und/oder die zweite Lage (6) an dem der Gaseintrittsseite zugewandten und/oder dem der Gasaustrittsseite zugewandten Endbereich die Lage (5, 6) durchdringende Löcher aufweist.

## Claims

1. Catalyst (7) for cleaning exhaust gases, having a honeycomb body (8) which configures a plurality of flow ducts through which a gas from a gas inlet side can flow in the axial direction to a gas outlet side, having an inner casing (9) which encloses the honeycomb body (8), having an outer casing (11) which encloses the inner casing (9), and having an insulation region (10) which is disposed between the inner casing (9) and the outer casing (11), **characterized in that** the honeycomb body (8), the inner casing (9), the outer casing (11) and the insulation region (10) are formed from exactly two tiers (5, 6) formed from metal foils that are stacked on top of one another and wound along a winding direction (19) transverse to the axial direction (20).

2. Catalyst (7) according to Claim 1, **characterized in that** the first tier (5) is at least partially structured and the second tier (6) is smooth.

3. Catalyst (7) according to one of the preceding claims, **characterized in that** the first tier (5) is divided into a plurality of portions (1, 2, 3, 4) which are disposed adjacent to one another along the winding direction (19).

4. Catalyst (7) according to one of the preceding claims, **characterized in that** the first tier (5) has alternating structured and smooth portions (1, 2, 3, 4).

5. Catalyst (7) according to one of the preceding Claims 3 and 4, **characterized in that** the first portion (1) of the first tier (5) conjointly with the second tier (6) configures the honeycomb body (8) having the flow ducts.

6. Catalyst (7) according to one of the preceding Claims 3 to 5, **characterized in that** the second portion (2) of the first tier (5) conjointly with the second tier (6) configures the inner casing (9) which in the radial direction delimits the region capable of a through flow.

7. Catalyst (7) according to one of the preceding Claims 3 to 6, **characterized in that** the third portion (3) of the first tier (5) conjointly with the second tier (6) forms the insulation region (10) which spaces the inner casing (9) from the outer casing (11).

8. Catalyst (7) according to one of the preceding Claims 3 to 7, **characterized in that** the fourth portion (4) of the first tier (5) conjointly with the second tier (6) configures the outer casing (11) which in the radial direction outwardly delimits the catalyst (7).

9. Catalyst (7) according to one of the preceding Claims 3 to 8, **characterized in that** the third portion (3) and/or the fourth portion (4) of the first tier (5) is coated with a coating that reduces the emissivity and/or with a coating having a lower thermal conductivity than the base material of the tier (5).

10. Catalyst (7) according to one of the preceding Claims 3 to 9, **characterized in that** the second portion (2) of the first tier (5) and/or the second tier (6) have/has bores that penetrate the tier (5, 6) at the end region that faces the gas inlet side and/or the end region that faces the gas outlet side.

## Revendications

1. Catalyseur (7) destiné au nettoyage de gaz d'échappement, ledit catalyseur comprenant un corps en nid d'abeilles (8) qui forme une pluralité de conduits d'écoulement qui peuvent être parcourus dans la direction axiale depuis un côté entrée de gaz vers un côté de sortie de gaz, une chemise intérieure (9) qui entoure le corps en nid d'abeilles (8), une chemise extérieure (11) qui entoure la chemise intérieure (9) et une zone d'isolation (10) qui est disposée entre la chemise intérieure (9) et la chemise extérieure (11), **caractérisé en ce que** le corps en nid d'abeilles (8), la chemise intérieure (9), la chemise extérieure (11) et la zone d'isolation (10) sont formées d'exactement deux couches (5, 6) qui sont formées de feuilles métalliques et qui sont empilées l'une sur l'autre et enroulées suivant une direction d'enroulement (19) transversalement à la direction axiale (20) .

2. Catalyseur (7) selon la revendication 1, **caractérisé en ce que** la première couche (5) est au moins partiellement structurée et la deuxième couche (6) est lisse.

3. Catalyseur (7) selon l'une des revendications précédentes, **caractérisé en ce que** la première couche (5) est divisée en plusieurs portions (1, 2, 3, 4) qui sont disposées les unes à côté des autres suivant la direction d'enroulement (19).

4. Catalyseur (7) selon l'une des revendications précédentes, **caractérisé en ce que** la première couche (5) comporte une alternance de portions structurées et lisses (1, 2, 3, 4) .

5. Catalyseur (7) selon l'une des revendications précédentes 3 ou 4, **caractérisé en ce que** la première portion (1) de la première couche (5) forme avec la deuxième couche (6) le corps en nid d'abeilles (8) pourvu des conduits d'écoulement.

6. Catalyseur (7) selon l'une des revendications précédentes 3 à 5, **caractérisé en ce que** la deuxième portion (2) de la première couche (5) forme avec la deuxième couche (6) la chemise intérieure (9) délimitant dans la direction radiale la zone d'écoulement.

7. Catalyseur (7) selon l'une des revendications précédentes 3 à 6, **caractérisé en ce que** la troisième portion (3) de la première couche (5) forme avec la deuxième couche (6) la zone d'isolation (10) qui espace la chemise intérieure (9) de la chemise extérieure (11).

8. Catalyseur (7) selon l'une des revendications précédentes 3 à 7, **caractérisé en ce que** la quatrième portion (4) de la première couche (5) forme avec la deuxième couche (6) la chemise extérieure (11) délimitant le catalyseur (7) vers l'extérieur dans la direction radiale.

9. Catalyseur (7) selon l'une des revendications précédentes 3 à 8, **caractérisé en ce que** la troisième portion (3) et/ou la quatrième portion (4) de la première couche (5) sont revêtues d'un revêtement réduisant le degré d'émission et/ou d'un revêtement ayant une conductivité thermique plus faible que celle du matériau de base de la couche (5).

10. Catalyseur (7) selon l'une des revendications précédentes 3 à 9, **caractérisé en ce que** la deuxième portion (2) de la première couche (5) et/ou de la deuxième couche (6) comporte des trous pénétrant dans la couche (5, 6) dans la zone d'extrémité dirigée vers le côté entrée de gaz et/ou la zone d'extrémité dirigée vers le côté sortie de gaz.
